# FASCICULE DE BREVET EUROPEEN

(11) **EP 1 958 318 B1**
(45) Date de publication et mention de la délivrance du brevet: **15.10.2014**
(21) Numéro de dépôt: 06842094.2
(22) Date de dépôt: 05.12.2006
(51) Int. Cl.: H02K 9/20, F28D 15/02

(54) **DISPOSITIF DE REFROIDISSEMENT A CALODUC, POUR MACHINE ELECTRIQUE TOURNANTE**
MIT WÄRMEROHR AUSGESTATTETE KÜHLEINRICHTUNG FÜR EINE ELEKTRISCHE DREHMASCHINE
HEAT PIPE-EQUIPPED COOLING DEVICE FOR A ROTATING ELECTRIC MACHINE

(30) Priorité: 08.12.2005 FR 0512467
(43) Date de publication de la demande: 20.08.2008
(73) Titulaire: VALEO EQUIPEMENTS ELECTRIQUES MOTEUR, 94046 Créteil Cedex (FR)
(72) Inventeur: FAKES, Michel, F-59113 Seclin (FR); VASILESCU, Claudiu, F-75020 Paris (FR); RICHARD, Daniel, F-91800 Boussy Saint Antoine (FR)
(74) Mandataire: Gamonal, Didier
(86) Numéro de dépôt international: PCT/FR2006/051283
(87) Numéro de publication internationale: WO 2007/066038

(56) Documents cités:
- FR-A- 2 855 673
- FR-A1- 2 790 149
- JP-A- 9 074 727
- JP-A- 63 198 778
- JP-A- 63 262 044
- US-A- 4 295 067
- PATENT ABSTRACTS OF JAPAN vol. 005, no. 189 (M-099), 28 novembre 1981 (1981-11-28) -& JP 56 108098 A (MATSUSHITA ELECTRIC IND CO LTD), 27 août 1981 (1981-08-27)
- PATENT ABSTRACTS OF JAPAN vol. 015, no. 039 (M-1075), 30 janvier 1991 (1991-01-30) -& JP 02 275294 A (FURUKAWA ELECTRIC CO LTD:THE), 9 novembre 1990 (1990-11-09)

## Description

### Domaine de l'invention

L'invention concerne un dispositif de refroidissement comportant un caloduc dont la partie d'évaporation se trouve dans une zone chaude et la partie de condensation dans une froide, ledit caloduc étant destiné à évacuer la chaleur de la zone chaude vers la zone froide.

### Etat de la technique

Des dispositifs de refroidissement de ce type sont déjà connus notamment par le document US 4 295 067 conforme au préambule de la revendication 1, mais du fait que le caloduc est réalisé en un matériau électriquement conducteur, les zones chaude et froide doivent obligatoirement présenter le même potentiel électrique.

### Objet de l'invention

La présente invention a pour but de pallier cet inconvénient.

Ce but est atteint selon l'invention par la partie caractérisante de la revendication 1.

### Description sommaire des dessins

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :
- la figure 1 est une vue de dessus d'une partie d'un palier arrière d'une machine électrique tournante et illustre de façon schématique un mode d'application de l'invention, et
- la figure 2 est une vue partielle en coupe selon la ligne 2-2 de la figure 1 ;
- la figure 3 est une vue en coupe du caloduc de la figure 1 monté sur le régulateur de tension de la figure 1 ;
- les figures 4 à 6 sont des vues analogues à la figure 2 pour respectivement un deuxième, un troisième et un quatrième mode de réalisation selon l'invention ;
- la figure 7 est une vue analogue à la figure1 pour un cinquième exemple de réalisation de l'invention.

### Description de l'invention

L'invention sera décrite ci-après dans son application à un palier arrière d'une machine électrique tournante. Cette application n'est cependant donnée qu'à titre d'exemple.

Cette machine électrique tournante est par exemple un alternateur polyphasé notamment pour véhicule automobile. Cet alternateur comporte un carter de forme creuse comportant au moins un flasque avant et un palier arrière, dits palier avant et palier arrière.

Ce carter est destiné à être monté sur une partie fixe.

A l'intérieur sont logés un stator entourant un rotor solidaire d'un arbre monté à rotation dans le carter à l'aide de roulements, tels que des roulements à billes, portés centralement respectivement par le palier arrière et le palier avant.

Le stator comporte un corps de stator rainuré portant un bobinage de stator comprenant des enroulements dont le nombre varie en fonction notamment du nombre de phases que comporte l'alternateur. Le corps du stator est porté par le carter en étant implanté à la périphérie externe de celui-ci. Ce corps consiste par exemple en un paquet de tôles.

Un entrefer existe entre la périphérie interne du corps du stator et la périphérie externe du rotor.

Le rotor est par exemple un rotor à griffes ou un rotor à pôles saillants.

L'arbre traverse centralement le rotor en étant lié en rotation à celui-ci par exemple par emmanchement à force, l'arbre comportant à cet effet aux moins une portion à reliefs emmanchée à force dans l'ouverture centrale que comporte le rotor pour ce faire.

L'extrémité avant de l'arbre traverse le palier avant et porte un organe d'entraînement, tel qu'une poulie ou une roue dentée, appartenant à un dispositif de transmission de mouvement, par exemple à courroie(s) ou chaîne(s), intervenant entre l'arbre de l'alternateur et le vilebrequin du moteur thermique du véhicule automobile.

Le rotor comporte un corps de rotor, de préférence en matériau ferromagnétique. Au moins un bobinage d'excitation est associé au corps. Lorsque le bobinage d'excitation est alimenté électriquement, le corps du rotor est aimanté avec formation de pôles magnétiques, le corps du rotor étant configuré en conséquence.

Il se produit alors, lorsque l'arbre tourne, un courant induit dans le bobinage du stator.

Ce courant induit est du type alternatif en sorte qu'il est prévu un dispositif de redressement, tel qu'un pont de diodes ou un pont de transistors du type MOSFET, pour transformer le courant alternatif en un courant continue afin d'alimenter électriquement au moins une charge, telle qu'une charge appartenant au réseau de bord du véhicule et/ou une batterie.

Le dispositif de redressement de courant est doté de plusieurs branches et est le plus souvent porté par le palier arrière de la machine électrique tournante. Ce dispositif comporte un dissipateur positif portant des éléments de redressement positifs, par exemple des diodes positives, un dissipateur négatif portant des éléments de redressement négatifs, tel que des diodes négatives, et un connecteur en matériau électriquement isolant portant des liaisons électriques pour relier électriquement entre eux les éléments de redressement afin de former des branches du dispositif de redressement, tel qu'un pont de diodes, et de relier électriquement les sorties des enroulements, connectées par exemple en étoile ou en triangle, du bobinage du stator au dispositif de redressement.

Le dissipateur négatif est relié électriquement à la masse, tandis que le dissipateur positif porte une borne de sortie, dite borne B+ destinée à être reliée à la borne positive d'une batterie.

Ces dissipateurs sont dans un mode de réalisation métalliques. Avantageusement le dissipateur négatif est constitué par le fond palier arrière de forme creuse.

Le bobinage d'excitation du rotor est relié électriquement à un régulateur de tension pour limiter la tension produite par l'alternateur et protéger les charges.

Dans un mode de réalisation l'alternateur est sans balais et le bobinage d'excitation est fixe. Dans un autre mode de réalisation l'alternateur présente des balais et le bobinage d'excitation est porté par le corps du rotor.

Dans ce cas l'extrémité arrière de l'arbre porte deux bagues collectrices reliées par des liaisons filaires aux extrémités du bobinage d'excitation.

Des balais sont destinés à frotter sur les bagues collectrices. Ces balais sont montés dans un porte-balais appartenant le plus souvent à un ensemble régulateur porte-balais porté également par le palier arrière.

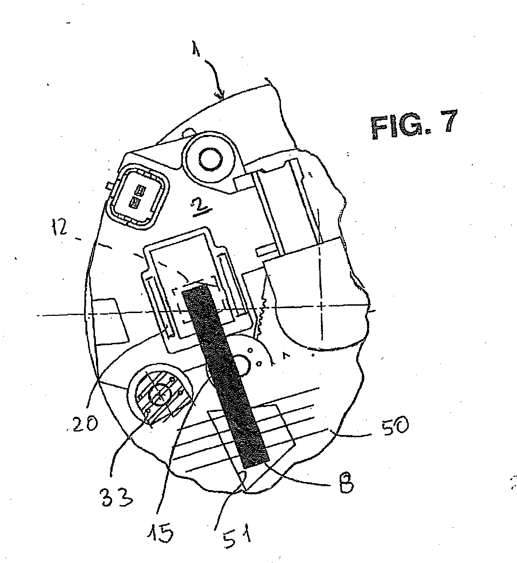

A titre d'exemple on se reportera au document WO 02/29958 divulguant, dans le cadre d'un alternateur à balais et à dispositif de redressement sous la forme d'un pont de diodes,une telle disposition mieux visible dans les figures 7 et 14 à 17 de ce document.

Dans ce document le rotor est un rotor à griffes doté d'un corps comportant deux roues polaires entre lesquelles est intercalé un noyau portant le bobinage d'excitation. Cet alternateur est refroidi par air. Pour ce faire le rotor porte à chacune des ses extrémités axiales un ventilateur et les paliers avant et arrière du carter sont dotés d'ouvertures d'entrée et de sortie d'air pour circulation interne de l'air à l'aide des ventilateurs.

Cette circulation de l'air permet de refroidir les enroulements du stator ainsi que le pont de redressement et l'ensemble régulateur de tension-porte balais coiffés par un capot de protection troué et relié à fixation au palier arrière.

Le régulateur de tension comporte un sous-ensemble comportant par exemple un substrat sur lequel est monté au moins un composant électronique élémentaire tel qu'une puce.

Ce régulateur assume la régulation de la tension de l'alimentation de la batterie et des charges. Il peut être du type monofonction ou du type multifonction pour notamment dialoguer avec au moins un calculateur et/ou assurer la détection de défauts, tels que la détection d'absence de rotation ou la détection de la rupture de la courroie.

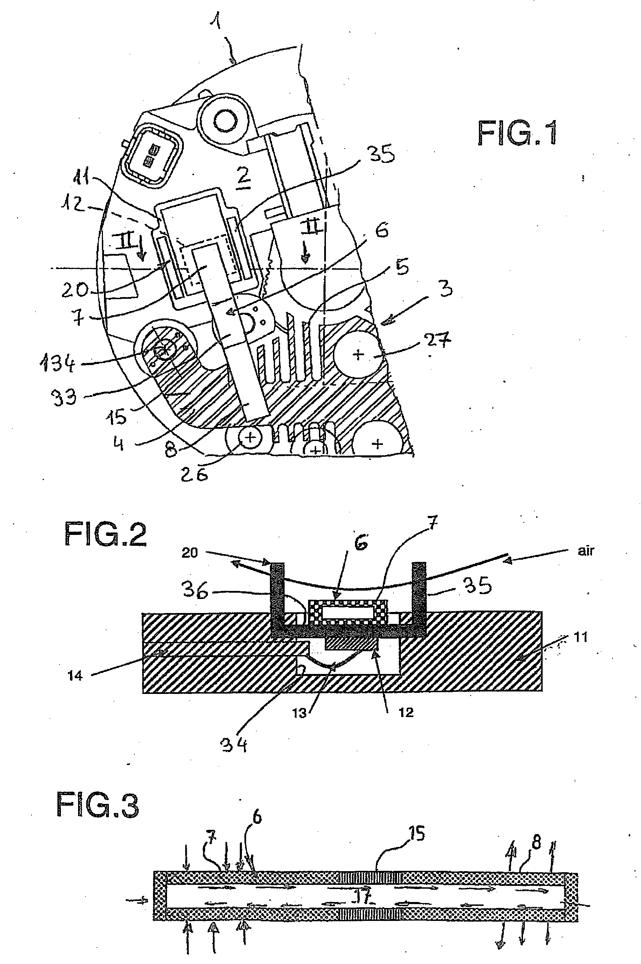

La figure 1 montre une partie du palier arrière désignée par 1 d'une machine électrique tournante, de structure classique, par exemple du type de celui décrit dans le document WO 02/29958 précité.

Ce palier arrière 1 est donc de forme creuse et comporte un fond, visible à la figure 1, doté centralement d'ouvertures de passage d'air et prolongé à sa périphérie externe par un rebord périphérique adjacent au stator. Ce rebord est également doté d'ouvertures de passage d'air.

A la figure 1 on n'a pas représenté le capot de protection coiffant le dispositif de redressement, ici un pont de diodes, pour mieux voir les pièces coiffées par ce capot.

Ainsi sur cette figure, sont indiqués en 2 l'ensemble comprenant le régulateur de tension et le porte-balais, en 33 une patte appartenant au dissipateur positif 4 appartenant au dispositif de redressement de courant 3, comportant ici des éléments de redressement en forme de diodes. Le dissipateur négatif est constitué ici par le fond du palier arrière portant des diodes 26, dites diodes négatives, dont certaines sont visibles à la figure 1. Le dissipateur positif 4, avantageusement métallique porte également des diodes 27, dites diodes positives. Un connecteur, non visible, intervient entre les deux dissipateurs. Le dissipateur positif 4 est doté ici d'ailettes de refroidissement 5.

Le but de l'invention consiste à assurer le refroidissement, dans un mode de réalisation, du régulateur de tension 2, comportant une partie, telle qu'au moins une trace 14, reliée au potentiel négatif.

Conformément à une caractéristique de l'invention, dans le mode de réalisation des figures 1 à 3, le refroidissement est réalisé à l'aide d'un caloduc 6 dont la partie d'évaporation 7 est associée au régulateur de tension constituant une source chaude, tandis que la partie de condensation 8 est associée à une source froide. Les parties 7 et 8 sont électriquement conductrices.

Dans cette figure la source froide est le dissipateur positif 4 du dispositif de redressement de courant 3. La partie de condensation 8 du caloduc est montée sur le dissipateur positif 4, plus précisément au voisinage des ailettes de refroidissement 5 du dissipateur 4.

Cette partie de condensation est implantée également au voisinage de la patte 33 du dissipateur 4. Cette patte 33 sert au montage de la borne B+ rapportée par exemple par vissage sur la patte 33 troué à cet effet. A la figure 1 on voit en 134 ce trou. Cette borne B+ est reliée par un câble à la borne positive de la batterie constituant une source froide. Le câble permet donc d'évacuer les calories en sorte que la patte 33 est une zone froide, qui est au potentiel positif.

La partie de condensation 8 du caloduc 6 est donc montée à côté d'une zone froide du dissipateur positif 4 bien refroidi grâce aux ailettes 5.

La partie d'évaporation 7 du caloduc 6 est montée, par exemple de la manière illustrée sur la figure 2, qui montre en 11 une couche en matière plastique appartenant au régulateur de tension et disposée sur le palier arrière 1, et en 12 au moins un composant électronique, tel qu'une puce, du régulateur de tension dont le boîtier est relié par un fil de connexion électrique 13 à une trace métallique 14 de connexion électrique reliée à un potentiel de référence. Cette trace s'étend dans la couche 11. Dans le cas représenté, la partie d'évaporation 7 du caloduc 6 est en contact indirect avec la puce en étant montée sur une plaque dissipatrice de chaleur 20, mais toute autre possibilité de montage connue, tel qu'un montage sur un dissipateur de chaleur par exemple doté d'ailettes de refroidissement, est envisageable. La plaque 20 est solidaire de la couche 11.

Plus précisément la plaque 20 est- ici métallique et présente en section une forme en U avec deux ailes 35 et un fond 36. Le caloduc 6 s'étend par sa partie 7 au contact de la face supérieure du fond 36, tandis que la puce 12 s'étend au contact de la face inférieure du fond 36. La partie d'évaporation 7 et la puce 12 s'étendent donc de part et d'autre du fond 36. Cette partie 7 du caloduc 6 et la puce 12 sont fixés sur le fond 36 de la plaque 20 par exemple à l'aide d'une colle thermoconductrice. En variante la fixation de ces composants sur le fond 36 est réalisée par brasage.

On notera que la couche 11 présente une cavité 34 pour loger la puce 12, la partie 7, en majeure partie le fond 36, le fil de connexion 13 et l'extrémité libre apparente dé la trace 14 reliée électriquement, au fil 13.

Les extrémités du fond 36 et les parties basses des ailes 35 sont ancrées dans la couche 11 par exemple par la technique du surmoulage. On notera que la trace 14 est ici au potentiel négatif.

Les ailes 35 s'étendent perpendiculairement à la couche 11 et sont refroidies par circulation de l'air schématisée par une flèche à la figure 2 en sorte que la plaque 20 est une plaque dissipatrice de chaleur formant dissipateur de chaleur.

Du côté de condensation 8, le caloduc est fixé, de toute manière appropriée par exemple par brasage ou collage, au dissipateur positif 4 du pont de diodes groupées par paires, chaque paire comportant de manière connue une diode positive et une diode négative.

Or, la puce du régulateur, reliée à trace 14 au potentiel négatif, et le dissipateur positif 4 du pont de diodes, au potentiel positif, possèdent des potentiels électriques différents, si bien que l'utilisation d'un caloduc connu provoquerait un court-circuit entre les deux potentiels.

Pour résoudre ce problème, il est proposé d'utiliser selon une caractéristique de l'invention un caloduc tel que représenté sur la figure 3, qui comporte entre ses parties d'évaporation 7 et de condensation 8, électriquement conductrices, une partie électriquement isolante 15 tout en préservant les qualités de super-conducteur thermique du caloduc. Ainsi, la partie évaporateur et la partie condensateur du caloduc faites en un matériau thermiquement et électriquement conducteur sont séparées par la partie isolante 15, ces trois parties mises bout à bout étant prévues de façon à ne pas modifier le transport du fluide caloporteur 17 à l'intérieur du caloduc pour l'évacuation de la chaleur du régulateur de tension 2 vers le dissipateur positif 4, sans risque d'un court-circuit, grâce à la partie isolante 15.

Pour mémoire on rappellera que le caloduc 6 comporte une enceinte étanche, ici 7, 15, 8, à l'intérieure de laquelle se trouve le fluide caloporteur 17.

Dans un mode de réalisation économique les parties 7, 8 sont en cuivre ou en nickel et le fluide caloporteur 17 est de l'eau.

Dans un autre mode de réalisation le fluide caloporteur est de l'ammoniaque et les parties 7, 8 en nickel, en aluminium ou en acier inoxydable.

Dans encore un autre mode de réalisation les parties 7, 8 sont en nickel, en cuivre ou en acier inoxydable et le fluide caloporteur est du méthanol.

Bien entendu les parties 7, 8 peuvent être en plusieurs matières.

Par exemple les parties 7, 8 peuvent être en acier plaqué intérieurement avec du cuivre, le fluide caloporteur étant de l'eau.

La partie isolante 15 est dans un mode de réalisation en matière plastique.

Dans le mode de réalisation de la figure 3 le caloduc est du type à pompage capillaire.

Le fluide caloporteur 17 est en équilibre avec sa vapeur. Il y a une faible quantité de liquide en contact avec les parties 7, 15, 8 en sorte que les parties 7 et 8 sont bien isolées électriquement malgré la présence de liquide dans la partie 15 isolante.

Dans un mode de réalisations ces parties 7, 15, 8 de forme creuse sont dotées de rainures pour pompage capillaire du fluide caloporteur.

Dans cette figure 3 on a représenté par des flèches la circulation du liquide 17 dans l'enceinte 7, 15, 8 et à l'extérieur on a également schématisé par des flèches respectivement l'absorption de chaleur dans la partie 7 et l'évacuation de chaleur dans la partie 8.

Il est à noter qu'un caloduc tel que représenté sur la figure 3 prévoyant une partie électriquement isolante entre ses parties d'évaporation et de condensation électriquement conductrices peut être utilisé, comme moyen de refroidissement, dans tous les cas d'applications où les éléments ou dispositifs auxquels les deux parties du caloduc sont reliées possèdent des potentiels électriques différents.

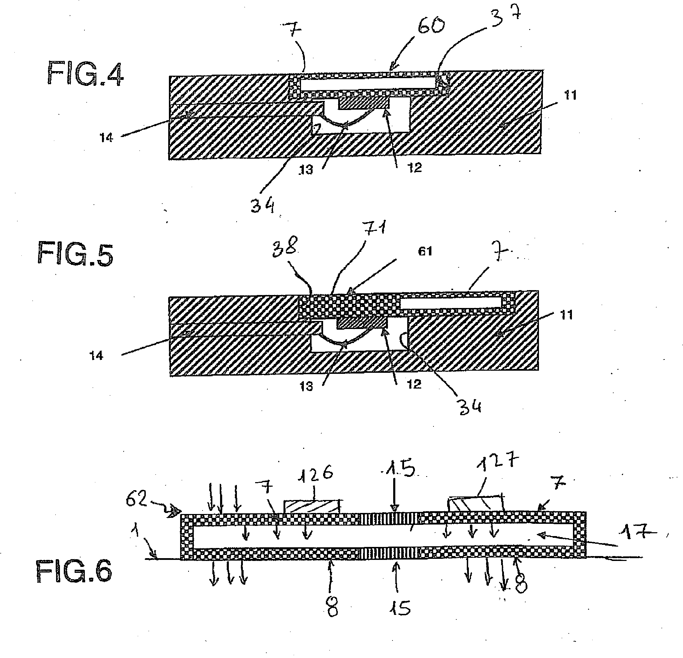

Ainsi, le composant électronique de régulation étant fixé directement ou indirectement sur la partie d'évaporation du caladuc, dans le mode de réalisation de la figure 6 le caloduc 62 peut servir de support à des composants électroniques 126, 127 en forme de puces, tels que des diodes ou des transistors, du disposit-if de redressement de courant comme visible à la figure 6.

Les puces 126, 127 peuvent consister en des diodes ou en des transistors du type MOSFET. Ces puces appartiennent au dispositif de redressement de courant. Le nombre de diodes ou de transistor du type MOSFET dépend du nombre de phases de la machine électrique tournante. Les puces 126 correspondent aux diodes 26 négatives de la figure 1 et les puces 127 aux diodes positives 27 de la figure 1. Le caloduc 62 sert donc de support au dispositif de redressement.

Dans ce cas le caloduc est plat et présente sur l'une de ses faces deux parties d'évaporation 7, électriquement conductrices, séparées par une partie électriquement isolante 15 et sur l'autre de ses faces deux parties de condensation 8, électriquement conductrices, séparées par une partie électriquement isolante 15. Les parties de condensation 8 sont montées ici sur le palier arrière 1, formant dissipateur de chaleur. En variante le caloduc 62 est en contact avec un pont dissipateur de chaleur formant une mezzanine au-dessus du pont arrière comme décrit dans le document WO 2004/040738 auquel on se reportera.

Dans cette figure on a représenté par des flèches, comme à la figure 3, la circulation du fluide caloporteur 17 à l'intérieur de l'enceinte 7, 15,8 et à l'extérieur par des flèches l'absorption de chaleur et l'évacuation de chaleur.

Les puces 126, 127 sont fixées directement, par exemple par collage ou brasage, sur la partie d'évaporation 7. En variante les puces sont fixées de manière indirecte sur la partie d'évaporation 7 par exemple via une plaque dissipatrice de chaleur par exemple du type de celle de la figure 1.

Bien entendu en variante on peut monter uniquement les puces 127, au potentiel positif, sur la partie d'évaporation 7 du caloduc 6 de la figure 3.

Le caloduc présenté donc au moins une partie d'évaporation et une partie de condensation séparées par une partie électriquement isolante.

Le caloduc peut avoir toute forme appropriée, par exemple être un caloduc plat de manière précitée ou de toute autre forme, à condition de comprendre entre ces deux parties d'évaporation et de condensation une partie électriquement isolante.

De même on peut modifier le ou les dissipateurs 20, 4, le palier arrière 1 ou la mezzanine pour pouvoir fixer la partie de condensation du caloduc par vissage, rivetage, encliquetage ou clinchage.

La partie d'évaporation peut être également fixée par vissage, rivetage, encliquetage ou clinchage.

En variante comme visible à la figure 4 la puce 12 est fixée directement, par exemple par collage, sur la partie d'évaporation 7 du caloduc 60. Dans ce cas le caloduc 60 est plus large que le caloduc 6 de la figure 1 et la cavité 34 comporte une partie supérieure élargie 37 pour la réception de la partie 7.

La cavité 34 est donc étagée.

En variante, comme visible à la figure 5, on élargit encore la partie supérieure 38 de la cavité 34 étagée pour loger un caloduc 61 encore plus large en sorte que la zone d'évaporation 7 est déportée par rapport à la puce 12 fixée sur une partie pleine 71 du caloduc adjacente à la partie d'évaporation 7.

Bien entendu la présente invention n'est pas limitée à l'exemple de réalisation décrit.

Le rotor de la machine peut être un rotor à pôles saillants.

En variante, comme décrit dans le document DE 40 187 10 la machine peut comporter deux rotors à griffes et deux stators.

La machine peut être refroidie par eau.

Par exemple l'un des palier du carter peut être doté d'ouvertures de passage d'air pour être refroidi par une circulation de l'air créée par un ventilateur solidaire du rotor ou de l'arbre, tandis que l'autre palier comporte au moins un canal relié à un raccord d'entrée et de sortie pour être refroidi par circulation d'un liquide. Ce liquide de refroidissement peut dans un mode de réalisation être le liquide de refroidissement du moteur à combustion interne ou moteur thermique du véhicule automobile.

Le fond du palier arrière ou du palier avant peut donc être refroidi par circulation d'un liquide.

La machine peut être refroidie uniquement par circulation d'un liquide, le carter de la machine comportant de manière précitée au moins un canal de circulation du fluide de refroidissement comme décrit dans le document DE 40 187 10.

Le ventilateur peut être implanté à l'extérieur comme dans les documents DE 30 12 636 et JP 56199707.

Il en résulte, en considérant ces deux documents que le dispositif de redressement et le régulateur de tension et la borne B+ sont en variante portés par le palier avant de la machine ou en variante implantés entre le fond, par exemple du palier arrière, et le rotor de la machine. Il en résulte également que la borne B+ est en variante portée par le palier avant ou par le palier arrière constituant un capot.

On peut implanter en variante le dispositif de redressement de courant, le régulateur de tension et la borne B+ à la périphérie externe du carter.

En variante on peut doubler le nombre de composants comme visible à la figure 2 du document DE 40 187 10 précité.

Dans ce cas le caloduc à partie électriquement isolante relie entre les deux régulateurs de tension, constituant la source chaude, à une source froide. Le caloduc peut dans un mode de réalisation avoir une forme en T avec une tête, formée par les deux parties d'évaporation reliées entre elles, et une partie verticale reliée à une source froide. La source froide et la source chaude peuvent ne pas avoir le même potentiel grâce au caloduc.

En variante un caloduc à partie électriquement isolante et en forme de T présente une tête qui porte les diodes positives des deux dispositifs de redressement, sa partie verticale étant reliée à une source froide au potentiel négatif, tel que le carter.

U autre caloduc en forme de T peut porter les diodes négatives des deux dispositifs de redressement.

Toutes les combinaisons sont possibles, le caloduc du type de la figure 6 pouvant porter au moins les diodes positives et être en contact avec le régulateur de tension.

Un même caloduc peut donc porter des éléments électroniques appartenant à des dispositifs différents.

Dans les modes de réalisation précédents la chaleur dissipée par la puce est évacuée par convexion forcée via le caloduc et également par conduction via le câble reliant la borne positive de la batterie à la borne B+

La machine électrique tournante est en variante un alterno-démarreur, c'est à dire un alternateur réversible permettant de transformer également de l'énergie électrique en énergie mécanique notamment pour démarrer le moteur à combustion interne du véhicule automobile. Dans ce cas le dispositif de redressement de courant comporte de manière avantageuse des transistors du type MOSFET et peut être, dans un mode de réalisation, monté, ainsi que le régulateur de tension, dans un boîtier externe de la machine avec intervention de câbles entre le boîtier et la machine comme décrit dans le document FR A 2 745 445 auquel on se reportera.

Ainsi le porte-balais peut être distinct du régulateur de tension. Le caloduc selon l'invention intervient entre le régulateur de tension et le boîtier externe contenant le dispositif de redressement et le régulateur de tension. Ce boîtier comporte un fond fermé par un couvercle métallique formant dissipateur de chaleur. Le caloduc intervient avantageusement entre le régulateur de tension et le dissipateur de chaleur formant source froide.
Le régulateur de tension peut être doté de plusieurs traces 14.
Bien entendu toutes les combinaisons sont possibles. Ainsi on peut inverser les structures, par exemple la trace 14 est dans un mode de réalisation reliée au potentiel positif contrairement aux modes de réalisation des figures 2 et 4 à 5 dans lesquels la trace 14 est reliée au potentiel négatif. Ainsi en variante comme visible à la figure 7 la partie d'évaporation 7 est reliée à la puce 12 au potentiel positif, tandis que la partie de condensation 8 porte des ailettes 50 en regard d'une ouverture de passage d'air 51 ménagée ici dans le palier arrière 1 pour circulation de l'air à l'intérieur de la machine sous l'action d'au moins un ventilateur solidaire du rotor ou de l'arbre de la machine. Grâce à la partie électriquement- isolante 15, interposée entre les parties 7, 8, on évite tout court-circuit dans le cas ou les ailettes et/ou la partie de condensation viennent en contact avec le palier 1 au potentiel négatif. On notera que la partie 8 est bien refroidie car elle est implantée en regard de l'ouverture 51 et elle porte des ailettes 50.

Bien entendu, en variante à la figure 1, le dissipateur positif 4 peut être équipé d'un caloduc supplémentaire, par exemple d'un caloduc dont la zone de condensation, avantageusement équipée d'ailettes, s'étend en regard d'une ouverture du palier avant ou arrière prévue pour le passage de l'air, dont la circulation est réalisée grâce à au moins un ventilateur interne ou externe à la machine.
On peut standardiser le caloduc, les sources froide et chaudes pouvant être au même potentiel ou à des potentiels différents.
L'invention permet de mieux refroidir le régulateur de tension et/ou le dispositif de redressement de courant.

## Revendications

1. Dispositif de refroidissement comportant un caloduc (6, 60, 61, 62) dont les parties d'évaporation (8)et de condensation (7) se trouvent respectivement dans une zone chaude et froide, ledit caloduc étant destiné à évacuer la chaleur de la zone chaude vers la zone froide, **caractérisé en ce que** le caloduc(6, 60, 61, 62)comporte entre ses parties d'évaporation (8) et de condensation (7) une partie électriquement isolante (15) de façon que les zones chaude et froide soient isolées électriquement l'une de l'autre, **en ce que** la partie d'évaporation (7) du caloduc (6, 60, 61,) est reliée à un régulateur de tension (2) appartenant à une machine électrique tournante, telle qu'un alternateur ou un alterno-démarreur, et **en ce que** le régulateur de tension (2) comporte au moins un composant électronique de régulation (12), tel qu'une puce, fixé sur la partie d'évaporation (7) du caloduc (6, 60, 61, 63) directement ou indirectement, notamment via une plaque dissipatrice de chaleur (20) ou via une partie pleine (71) du caloduc adjacente à la partie d'évaporation (7).

2. Dispositif selon la revendication 1, **caractérisé en ce que** la machine électrique tournante , telle qu'un alternateur ou un alterno-démarreur, comporte un carter doté d'un palier avant et d'un palier arrière, **en ce que** l'un de ces paliers porte au moins un dispositif de redressement de courant comportant un dissipateur positif (4) portant des élément de redressement, tel que des diodes ou des transistors du type MOSFET et **en ce que** la partie de condensation (8)) du caloduc 6, 60, 61) est reliée ou appartient au dissipateur positif (4).

3. Dispositif selon la revendication 2, **caractérisé en ce que** le dissipateur positif (4) est porté à isolation électrique par le palier arrière (1) de la machine électrique tournante et **en ce que** la partie de condensation (8) du caloduc est reliée ou appartient au dissipateur positif.

4. Dispositif selon la revendication 2 ou 3, **caractérisé en ce que** le dissipateur positif (4) présente une patte (33) servant au montage d'une borne destinée à être reliée à la borne positive d'une batterie via un câble et **en ce que** la partie de condensation (8) du caloduc (6, 60, 61) est implantée au voisinage de ladite patte.

5. Dispositif selon l'une quelconque des revendications précédentes, **caractérisé en ce que** le régulateur de tension comporte une couche en matière plastique (11) dotée d'une cavité (34) pour le logement du composant électronique de régulation (12).

6. Dispositif selon l'une quelconque des revendications précédentes, **caractérisé en ce que** la machine électrique tournante , telle qu'un alternateur ou un alterno-démarreur, comporte un carter doté d'un palier avant et d'un palier arrière, **en ce que** l'un de ces paliers porte au moins un dispositif de redressement de courant comportant un dissipateur positif (4) portant des éléments de redressement de courant, tel que des diodes ou des transistors du type MOSFET,et **en ce que** le dispositif de redressement de courant comporte au moins un composant électronique de régulation (126, 127)) fixé directement ou indirectement sur la partie d'évaporation (7) du caloduc (62).

7. Dispositif selon la revendication 1 ou 6 prise en combinaison avec la revendication 1, **caractérisé en ce que** la machine électrique tournante comporte un carter doté d'un palier arrière et d'un palier avant et **en ce que** la partie de condensation (8) du caloduc porte des ailettes (50) en regard d'une ouverture de passage d'air ménagée dans l'un des paliers avant et arrière.

## Patentansprüche

1. Kühlvorrichtung, die ein Wärmerohr (6, 60, 61, 62) aufweist, dessen Verdampfungs- (7) und Kondensationsbereiche (8) sich in einer warmen bzw. kalten Zone befinden, wobei das Wärmerohr dazu bestimmt ist, die Wärme von der warmen Zone in die kalte Zone abzuführen, **dadurch gekennzeichnet, dass** das Wärmerohr (6, 60, 61, 62) zwischen seinen Verdampfungs- (7) und Kondensationsbereichen (8) einen elektrisch isolierenden Bereich (15) enthält, so dass die warme und die kalte Zone elektrisch voneinander isoliert sind, dass der Verdampfungsbereich (7) des Wärmerohrs (6, 60, 61,) mit einem Spannungsregler (2) verbunden ist, der zu einer drehenden elektrischen Maschine, wie ein Drehstromgenerator oder ein Starter-Generator, gehört, und dass der Spannungsregler (2) mindestens ein elektronisches Regelungsbauteil (12) wie einen Chip enthält, das auf dem Verdampfungsbereich (7) des Wärmerohrs (6, 60, 61, 62) direkt oder indirekt, insbesondere über eine Wärmeableitplatte (20) oder über einen massiven Bereich (71) des Wärmerohrs angrenzend an den Verdampfungsbereich (7), befestigt ist.

2. Vorrichtung nach Anspruch 1, **dadurch gekennzeichnet, dass** die drehende elektrische Maschine, wie ein Drehstromgenerator oder ein Starter-Generator, ein Gehäuse aufweist, das mit einem vorderen Lager und einem hinteren Lager versehen ist, dass eines dieser Lager mindestens eine Stromgleichrichtervorrichtung trägt, die einen positiven Ableiter (4) aufweist, der Gleichrichterelemente wie Dioden oder Transistoren von der Art MOSFET trägt, und dass der Kondensationsbereich (8) des Wärmerohrs (6, 60, 61) mit dem positiven Ableiter (4) verbunden ist oder dazu gehört.

3. Vorrichtung nach Anspruch 2, **dadurch gekennzeichnet, dass** der positive Ableiter (4) durch das hintere Lager (1) der drehenden elektrischen Maschine in elektrische Isolierung gebracht wird, und dass der Kondensationsbereich (8) des Wärmerohrs mit dem positiven Ableiter verbunden ist oder dazu gehört.

4. Vorrichtung nach Anspruch 2 oder 3, **dadurch gekennzeichnet, dass** der positive Ableiter (4) eine Lasche (33) aufweist, die zur Montage einer Klemme dient, die dazu bestimmt ist, mit der positiven Klemme einer Batterie über ein Kabel verbunden zu werden, und dass der Kondensationsbereich (8) des Wärmerohrs (6, 60, 61) in der Nähe der Lasche eingesetzt ist.

5. Vorrichtung nach einem der vorhergehenden Ansprüche, **dadurch gekennzeichnet, dass** der Spannungsregler eine Schicht aus Kunststoffmaterial (11) aufweist, die mit einem Hohlraum (34) zur Aufnahme des elektronischen Regelungsbauteils (12) versehen ist.

6. Vorrichtung nach einem der vorhergehenden Ansprüche, **dadurch gekennzeichnet, dass** die drehende elektrische Maschine, wie ein Drehstromgenerator oder ein Starter-Generator, ein Gehäuse aufweist, das mit einem vorderen Lager und einem hinteren Lager versehen ist, dass eines dieser Lager mindestens eine Stromgleichrichtervorrichtung trägt, die einen positiven Ableiter (4) aufweist, der Stromgleichrichterelemente wie Dioden oder Transistoren von der Art MOSFET trägt, und dass die Stromgleichrichtervorrichtung mindestens ein elektronisches Regelungsbauteil (126, 127) aufweist, das direkt oder indirekt auf dem Verdampfungsbereich (7) des Wärmerohrs (62) befestigt ist.

7. Vorrichtung nach Anspruch 1 oder 6 in Kombination mit Anspruch 1, **dadurch gekennzeichnet, dass** die drehende elektrische Maschine ein Gehäuse aufweist, das mit einem hinteren Lager und einem vorderen Lager versehen ist, und dass der Kondensationsbereich (8) des Wärmerohrs Rippen (50) gegenüber einer Luftdurchgangsöffnung trägt, die in einem der vorderen und hinteren Lager ausgespart ist.

## Claims

1. Cooling device comprising a heat pipe (6, 60, 61, 62), of which the evaporation (7) and condensation (8) parts are located respectively in a hot and a cold zone, said heat pipe being intended to discharge the heat from the hot zone to the cold zone, **characterized in that** the heat pipe (6, 60, 61, 62) comprises, between its evaporation (7) and condensation (8) parts, an electrically insulating part (15) such that the hot and cold zones are electrically insulated from one another, **in that** the evaporation part (7) of the heat pipe (6, 60, 61,) is linked to a voltage regulator (2) belonging to a rotating electric machine, such as an alternator or an alternating current starter, and **in that** the voltage regulator (2) comprises at least one electronic regulation component (12), such as a chip, fixed to the evaporation part (7) of the heat pipe (6, 60, 61, 62) directly or indirectly, notably via a heat-dissipating plate (20) or via a solid part (71) of the heat pipe adjacent to the evaporation part (7).

2. Device according to Claim 1, **characterized in that** the rotating electric machine, such as an alternator or an alternating current starter, comprises a casing provided with a front bearing and a rear bearing, **in that** one of the bearings bears at least one current-rectifying device comprising a positive dissipator (4) bearing rectifying elements, such as diodes or transistors of MOSFET type and **in that** the condensation part (8) of the heat pipe (6, 60, 61) is linked or belongs to the positive dissipator (4).

3. Device according to Claim 2, **characterized in that** the positive dissipator (4) is given electrical insulation by the rear bearing (1) of the rotating electric machine and **in that** the condensation part (8) of the heat pipe is linked or belongs to the positive dissipator.

4. Device according to Claim 2 or 3, **characterized in that** the positive dissipator (4) has a tab (33) that can be used to mount a terminal intended to be linked to the positive terminal of a battery via a cable and **in that** the condensation part (8) of the heat pipe (6, 60, 61) is located in the vicinity of said tab.

5. Device according to any one of the preceding claims, **characterized in that** the voltage regulator comprises a layer of plastic material (11) provided with a cavity (34) to house the electronic regulation component (12).

6. Device according to any one of the preceding claims, **characterized in that** the rotating electric machine, such as an alternator or an alternating current starter, comprises a casing provided with a front bearing and a rear bearing, **in that** one of these bearings bears at least one current rectifying device comprising a positive dissipator (4) bearing current rectifying elements, such as diodes or transistors of MOSFET type, and **in that** the current rectifying device comprises at least one electronic regulation component (126, 127) fixed directly or indirectly onto the evaporation part (7) of the heat pipe (62).

7. Device according to Claim 1 or 6 taken in combination with Claim 1, **characterized in that** the rotating electric machine comprises a casing provided with a rear bearing and a front bearing and **in that** the condensation part (8) of the heat pipe bears fins (50) facing an air passage opening formed in one of the front and rear bearings.
